# FASCICULE DE BREVET EUROPEEN

(11) **EP 4 032 869 B1**
(45) Date de publication et mention de la délivrance du brevet: **16.09.2026**
(21) Numéro de dépôt: 22153043.9
(22) Date de dépôt: 24.01.2022
(51) Int. Cl.: C04B 18/02, C04B 28/02, C09K 5/06

(54) **PROCÉDÉ DE SYNTHÈSE D'UN MATÉRIAU COMPOSITE APTE À STOCKER ET DÉSTOCKER DE L'ÉNERGIE THERMIQUE**
VERFAHREN ZUR SYNTHESE EINES VERBUNDMATERIALS, DAS WÄRMEENERGIE SPEICHERN UND FREIGEBEN KANN
METHOD FOR SYNTHESISING A COMPOSITE MATERIAL SUITABLE FOR STORING AND DESTOCKING THERMAL ENERGY

(30) Priorité: 25.01.2021 FR 2100685
(43) Date de publication de la demande: 27.07.2022
(73) Titulaire: Polymage, 06000 Nice (FR)
(72) Inventeur: GIULIERI, Françoise, 06000 NICE (FR); SIXOU, Pierre, 06300 NICE (FR)
(74) Mandataire: Hautier IP

(56) Documents cités:
- WO-A1-2017/198933
- CN-A- 109 082 122
- CN-A- 109 650 766
- SHEN QIANG ET AL: "Lauric acid/modified sepiolite composite as a form-stable phase change material for thermal energy storage", APPLIED CLAY SCIENCE, ELSEVIER, AMSTERDAM, NL, vol. 146, 29 May 2017 (2017-05-29), pages 14 - 22, XP085136620, ISSN: 0169-1317, DOI: 10.1016/J.CLAY.2017.05.035
- KONUKLU YELIZ ET AL: "Preparation and characterization of sepiolite-based phase change material nanocomposites for thermal energy storage", APPLIED THERMAL ENGINEERING, PERGAMON, OXFORD, GB, vol. 107, 9 July 2016 (2016-07-09), pages 575 - 582, XP029694050, ISSN: 1359-4311, DOI: 10.1016/J.APPLTHERMALENG.2016.07.012

## Description

### DOMAINE TECHNIQUE DE L'INVENTION

La présente invention concerne le domaine des matériaux composites et leur fabrication. Elle concerne plus particulièrement les procédés de synthèses de matériaux composites. L'invention trouvera une application plus spécifique pour les matériaux composites destinés à stocker l'énergie thermique et à réguler les apports et pertes énergétiques notamment dans les domaines du bâtiment, du textile, du packaging, de l'électronique, du transport, des énergies renouvelables.

### ETAT DE LA TECHNIQUE

Les matériaux composites sont intéressants à plusieurs titres et notamment du fait qu'ils permettent de combiner les propriétés des composants les constituant.

Dans la littérature et au niveau industriel, des matériaux à changement de phase (MCP) sont utilisés pour leur capacité à stocker et déstocker de la chaleur latente lors de leur transition de phase notamment solide-liquide. Introduits brut dans des matériaux traditionnels, ils présentent des modifications morphologiques lors du changement de phase, lesquelles impliquent des fuites, de la corrosion et une réduction de la stabilité de la réponse thermique. Ils sont donc souvent encapsulés sous forme de macro, micro ou nano-encapsulation.

Cependant, la macro-encapsulation est peu adaptable et ne permet pas de s'assurer de l'absence de fuite. Les procédés de fabrication utilisés pour la micro-encapsulation, la nano-encapsulation et la dispersion dans des phases « supports » sont complexes, longs et coûteux, car ils exigent l'usage de solvants, d'additifs, de technique de vide et/ou de chauffage, et ce sur plusieurs étapes.

On connait également le document WO2017/198933 qui décrit un matériau à changement de phase pour le stockage d'énergie thermique et son procédé de fabrication. Un MCP utilisé est de type solide-solide et le procédé de fabrication implique des composés à l'état liquide au cours d'une réaction au-dessus de la température de changement de phase.

Il existe donc le besoin de proposer un procédé qui permet de proposer des matériaux composites fiables et dont la fabrication est simplifiée.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre cet objectif, selon un mode de réalisation on prévoit un procédé de synthèse d'un matériau composite comprenant une matrice inorganique et un actif, l'actif étant un matériau à changement de phase caractérisé en ce que le procédé comprend au moins une étape d'assemblage de l'actif dans la matrice par mécano synthèse.

Le procédé de synthèse selon l'invention permet à l'actif d'être confiné dans différentes porosités créées au niveau de l'organisation de la matrice inorganique.

Le matériau composite obtenu est à haute valeur énergétique et comprend d'une part une matrice inorganique et d'autre part un ou plusieurs actifs confinés dans cette matrice.

Avantageusement, la mécanosynthèse ou encore la mécanotransformation permet que les particules solides soient aplaties, soudées, fracturées et ressoudées. La mécanosynthèse selon l'invention permet à la matrice inorganique et à l'actif de s'imbriquer pour former le composite grâce principalement à des phénomènes d'impact et de friction. Préférentiellement, le mélange de la matrice inorganique et de l'actif est un mélange de poudres.

Le procédé de fabrication est écologique.

Le procédé et plus particulièrement l'étape d'assemblage ne nécessite pas l'apport d'un solvant. L'absence de solvant simplifie le procédé et le rend plus respectueux de l'environnement. Le procédé est selon une possibilité réalisé sans production de déchet. Le procédé selon l'invention est peu énergivore.

Un autre aspect concerne un matériau composite obtenu par le présent procédé caractérisé en ce qu'à l'issue de l'étape d'assemblage, le matériau composite est à l'état solide, l'actif étant confiné dans la matrice inorganique.

Un autre aspect concerne un matériel comprenant le matériau composite, le matériel étant par exemple le plâtre, le ciment, le mortier, le béton ou encore le bois, le papier, les matières plastiques, le textile.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma de principe de l'étape d'assemblage comprenant un broyage haute énergie.
La figure 2 représente une réponse thermique lors de la charge et de la décharge d'une plaquette selon l'exemple 1.
La figure 3 représente la comparaison de la réponse thermique d'un matériau composite sous forme de plaquette (1) obtenue à l'exemple 1 avec la réponse d'une plaquette à base de la sépiolite (2) ou d'un mortier (3).
La figure 4 représente un spectre infrarouge des groupes carbonyles (VC0) de : (1) l'acide caprique nommé CA, (2) acide myristique MA, (3) le mélange CAMA obtenu dans la poudre de matériau composite Eco-PCM-CAMA70 obtenue à l'exemple 2.
La figure 5 représente la réponse thermique d'un matériau composite l'Eco-PCM CAMA 70 obtenu à l'exemple 2 sous forme d'une plaquette.
La figure 6 représente la réponse thermique du matériau composite Eco-PCM CAMA 70 obtenu à l'exemple 2 sous forme d'une plaquette à 4°C chauffée à 40°C (1) ou exposée au soleil au mois d'avril (2).
La figure 7 représente la réponse thermique du mortier Eco-PCM de l'exemple 3 composé de 90% en poudre d'un matériau composite Eco-PCM-SA70 obtenue à l'exemple 1 et 10% en mortier.
Les figures 8A et 8B comparent respectivement les réponses thermiques de plaquettes de mortier (2) et de plaquettes de sépiolite sans additifs (3) à la réponse de la plaquette de mortier chargé en matériau composite Eco-PCM (1). La forme des courbes et les temps de chauffe mettent en évidence un effet d'isolation thermique lié au temps de charge et décharge du matériau composite intégré dans le mortier.
La figure 9 représente la comparaison de la réponse thermique d'un carton selon l'exemple 4 contenant 60% d'un matériau composite Eco-PCM-SA70 (1) obtenu à l'exemple 1 avec la réponse d'un carton en papier moulé (2). La température appliquée est de 100°C pour la charge A, et 20°C pour la décharge B.
La figure 10 représente la réponse thermique en charge et décharge de plaques de matériau composite SepSA70 (1) et des plaques de matériau composite SepSA70 avec 2% de nanoparticules de carbone (2) obtenues à l'exemple7.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
Selon un exemple, l'étape d'assemblage par mécano synthèse est réalisée à une température inférieure à la température de changement de phase de l'actif.

Selon un exemple, l'étape d'assemblage par mécano synthèse est réalisée dans un broyeur à haute énergie. Ce broyeur va permettre aux particules solides d'être aplaties, soudées, fracturées et/ou ressoudées pour conduire au matériau composite.

Selon un exemple, l'étape d'assemblage par mécano synthèse est réalisée sans solvant.

Selon un exemple, l'étape d'assemblage par mécano synthèse est réalisée en présence de billes de broyage.

Selon un exemple, les billes de broyages ont un diamètre compris entre 1 mm et 100 mm. Selon un exemple, les billes de broyages représentent de 1/5 à 6 fois, préférentiellement de 1/5 à 10 fois le poids total de la matrice et de l'actif.

Selon un exemple, l'étape d'assemblage par mécano synthèse dure de 15 secondes à 10 heures, préférentiellement 1 heure.

Selon un exemple, l'actif représente de 1 à 90% en poids du poids total matrice et actif.

Selon un exemple, la matrice est choisie parmi :
- une argile de la famille des minéraux argileux de type TO, TOT ou TOT+O qui se présentent sous forme plaquettaire, tubulaire ou fibreux, par exemple les kaolinites, bentonites, perlites, vermiculites, montmorillonites, halloysites, sépiolites, palygorskites, ou
- des oxydes ou hydroxydes minéraux, par exemple des dérivés de carbonate de calcium micronisés, des poudres de marbre, des dérivés de la silice des diatomites, des microsilices, des nanosilices, ou
- du carbone sous forme de graphite, nano fibre ou fullerène, et des oxydes métalliques.

Selon un exemple, l'actif est choisi parmi des paraffines, des acides gras saturés, des alcools gras saturés, des esters d'acide gras, des polyéthylènes glycols, seuls ou en mélange.

Selon un exemple, l'actif est un MCP solide - liquide.

Selon un exemple, le matériau composite obtenu à l'issue de l'étape d'assemblage est sous forme de poudre micrométrique.

Selon un exemple, le procédé comprend une étape ultérieure de réagrégation du matériau composite obtenu à l'issue de l'étape d'assemblage, le matériau composite obtenu à l'issue de l'étape de réagrégation est sous forme de billes, de granules ou de pains.

Selon un exemple, le procédé comprend une étape ultérieure de broyage du matériau composite obtenu à l'issue de l'étape de réagrégation, le matériau composite obtenu à l'issue de l'étape de broyage est sous forme de poudre micrométrique. Cette étape de broyage n'est pas réalisée obligatoirement avec un broyeur haute énergie.

Selon un exemple, le procédé comprend une étape ultérieure d'humidification du matériau composite obtenu à l'issue de l'étape d'assemblage ou de l'étape de réagrégation, ou de l'étape de broyage comprenant l'ajout d'une quantité d'eau audit matériau composite, le matériau composite obtenu à l'issue de l'étape d'humidification est sous forme de mélange aqueux.

Selon un exemple, l'étape d'humidification est réalisée par l'ajout d'une quantité d'eau comprise entre 0,5 et 50 fois le poids du matériau composite à humidifier.

Selon un exemple, le procédé comprend une étape ultérieure de séchage du matériau composite obtenu à l'issue de l'étape d'humidification, le matériau composite obtenu à l'issue de l'étape de séchage est sous forme de plaques.

Selon une possibilité, l'étape de séchage est réalisée à température ambiante ou à une température inférieure à la température de changement de phase de l'actif ou à une température supérieure à la température de changement de phase de l'actif.

Selon un exemple, le procédé comprend une étape ultérieure de dispersion par agitation mécanique du matériau composite obtenu à l'issue de l'étape d'assemblage ou de l'étape de broyage comprenant l'ajout d'un système aqueux audit matériau composite avec une agitation mécanique, le matériau composite obtenu à l'issue de l'étape de dispersion par agitation mécanique est sous forme d'une suspension aqueuse.

Selon un exemple, le procédé comprend une étape ultérieure de dispersion par ultra-sonication du matériau composite obtenu à l'issue de l'étape d'assemblage ou de l'étape de broyage comprenant l'ajout d'un système aqueux audit matériau composite avec une agitation par ultra-sonication, le matériau composite obtenu à l'issue de l'étape de dispersion par ultra-sonication est sous forme de gel.

Selon un exemple, une quantité de poudre de matériau composite de 1 à 10 % est ajoutée dans de l'eau ou une solution d'aqueuse, plus précisément le système aqueux.

Selon un exemple, le procédé comprend une étape d'incorporation du matériau composite obtenu à l'issue de l'étape d'assemblage ou de l'étape de réagrégation ou de l'étape de broyage ou de l'étape d'humidification ou de l'étape de dispersion dans un procédé de fabrication de plâtre, de ciment, de mortier, de béton ou encore de papier, des matières plastiques, de composés de bois et leurs applications.

Le procédé selon l'invention permet l'obtention d'un matériau composite. Le matériau composite comprend d'une part une matrice inorganique et d'autre part au moins un actif.

L'actif est selon une possibilité biosourcé. L'actif est avantageusement apte à stocker et restituer de l'énergie thermique.,L'actif est un matériau à changement de phase, prenant alternativement une forme solide et une forme liquide autour d'une température de transition de phase. Préférentiellement, l'actif est organique. On entend par organique provenant d'une substance chimique organique tandis que la matrice est dite inorganique car provenant d'une substance chimique minérale. À titre d'exemple préféré, l'actif est choisi parmi des familles de paraffine ou des dérivés paraffiniques, des acides gras préférentiellement saturés, des alcools gras préférentiellement saturés, des esters d'acide gras, des polyéthylènes glycols.

Le matériau composite comprend au moins un actif, selon une possibilité, le matériau composite comprend plusieurs actifs choisis parmi la liste ci-dessus. Les actifs sont alors un mélange. Dans la suite de la description, il est fait mention à "un actif", à "l'actif" pour faciliter la description de l'invention sans pour autant que cela soit limitatif.

L'actif présente préférentiellement une température de changement de phase allant de -20°C à 300°C.

L'actif est dans le présent procédésous une forme solide préférentiellement sous forme de poudre.

La matrice inorganique est selon une possibilité géosourcée. La matrice inorganique a pour rôle principal d'être un support à l'actif.

À titre d'exemple préféré, la matrice inorganique est choisie parmi :
- une argile de la famille des minéraux argileux de type TO, TOT ou TOT+O qui se présentent sous forme plaquettaire, tubulaire ou fibreux, par exemple les kaolinites, bentonites, perlites, vermiculites, montmorillonites, halloysites, sépiolites, palygorskites, ou
- des oxydes ou hydroxydes minéraux, par exemple des dérivés de carbonate de calcium micronisés, des poudres de marbre, des dérivés de la silice des diatomites, des microsilices, des nanosilices, ou
- des composés carbonés dits 1D, 2D ou 3D tels que les nanotubes de carbone, graphènes ou carbones expansés, graphite, nano fibre ou fullerène, ou
- des oxydes métalliques, ou
- des semi-conducteurs.

La matrice inorganique est préférentiellement sous une forme solide préférentiellement fractionnée préférentiellement sous forme de poudre, par exemple de granulométrie au moins millimétrique préférentiellement d'une granulométrie maximale de 50 mm. Par exemple, la matrice inorganique peut être prébroyée pour obtenir une poudre de taille micrométrique.

Il est précisé que dans le cadre de la présente invention, le terme matériau composite est un assemblage d'au moins deux composants non miscibles, mais présentant une capacité de confinement de l'actif de telle manière que celui-ci cristallise sous la transition de phase sans pour autant relarguer au-dessus de la transition de phase.

Le matériau composite obtenu par le procédé selon l'invention se présente à l'issue de l'étape d'assemblable sous forme de poudre préférentiellement de taille micrométrique.

Selon une possibilité, le matériau composite est intégré dans d'autres matériaux traditionnels tels que le plâtre, le ciment, le mortier, le béton ou encore le bois, le papier, les matières plastiques. Le matériau composite obtenu par le procédé selon l'invention et les matériaux traditionnels intégrant ledit matériau composite présente l'intérêt de réguler les apports et pertes énergétiques dans divers domaines tels que le bâtiment, le textile, le packaging, l'électronique ou bien encore les énergies renouvelables.

Le matériau composite est apte à stocker et déstocker de l'énergie thermique.

Le matériau composite obtenu par le procédé selon l'invention est à haute valeur énergétique. Le matériau composite présente avantageusement une température d'utilisation comprise entre -20°C à 300°C.

Avantageusement, le matériau composite ne change pas de volume lors du changement de phase et avantageusement conserve ainsi une stabilité dimensionnelle.

Le procédé de synthèse selon l'invention comprend une étape d'assemblage de la matrice inorganique et d'au moins un actif.

L'étape d'assemblage est réalisée selon l'invention par mécanosynthèse ou mécanotransformation. La matrice inorganique et l'actif sont mélangés. Ils forment un mélange pour obtenir à la fin de l'étape d'assemblage le matériau composite.

On entend par mécano synthèse, une étape consistant à mélanger, voir à broyer ensemble au moins deux composants jusqu'à former un matériau composite.

Selon un mode de réalisation préféré, la quantité d'actif ajouté pour l'étape d'assemblage est comprise entre 1 et 90% du poids total de la matrice et de l'actif, préférentiellement entre 30 et 70%.

L'étape d'assemblage est réalisée sans apport de solvant. L'étape d'assemblage est préférentiellement réalisée avec des composants solides. On entend par solvant un composé à l'état liquide et préférentiellement dans lequel l'actif et/ou la matrice sont solubilisés.

Selon une possibilité, l'étape d'assemblage comprend l'ajout d'une aide à la dispersion. Plus spécifiquement, l'étape d'assemblage comprend l'ajout d'eau. L'eau ajoutée est une aide à la dispersion, l'actif et la matrice sont insolubles dans l'eau. L'eau ajoutée n'est pas un solvant.

Selon une possibilité de l'invention, l'étape d'assemblage est réalisée par un broyeur à haute énergie.

Pendant l'étape d'assemblage, l'actif et la matrice inorganique subissent notamment des transformations mécaniques telles que les particules de ces éléments sont aplaties, soudées, fracturées et/ou ressoudées. L'étape d'assemblage met en place notamment des phénomènes d'impact et de friction.

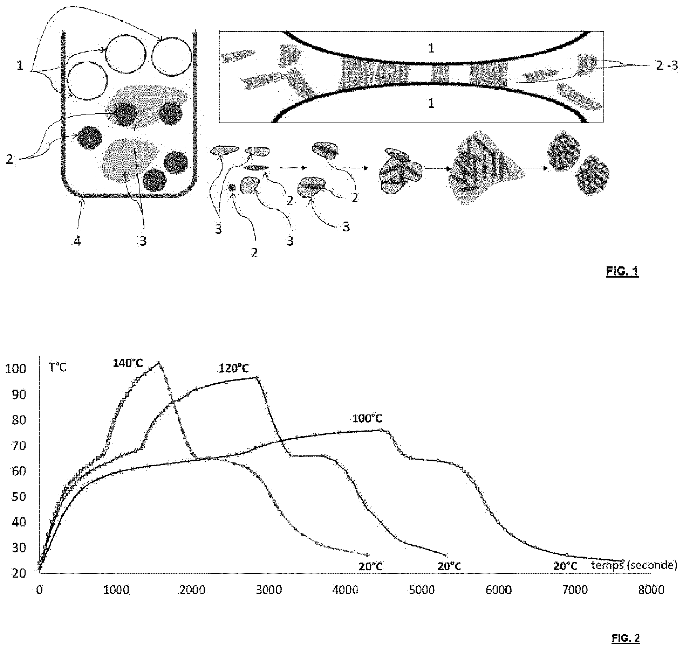

Les impacts et les frictions favorisent la réduction de taille, la désagrégation des particules, des agglomérats et des granules à base de molécules organiques cristallisées, ce qui augmente au maximum les surfaces de contact, tout en générant de nouvelles surfaces et en créant des défauts comme illustrés en figure 1. L'alternance déformation plastique, fracture et collage conduit à la fabrication d'un matériau composite organique/inorganique capable de stocker et déstocker de la chaleur. En figure 1, les billes 1, l'actif 2, la matrice inorganique 3 sont placés dans un bol 4. La figure 1 illustre les impacts et frictions qui assurent l'intégration et le confinement de l'actif 2 dans la matrice 3.

Le procédé selon l'invention est avantageusement configuré pour assurer le contrôle du maintien de l'actif dans les différents interstices et cavités formés par le réseau organisationnel de la matrice inorganique. Ce contrôle du maintien de l'actif est avantageusement assuré en ajustant d'une part le maintien de la température sous la transition de phase de l'actif, et d'autre part l'énergie mécanique apportée lors de la formation du composite. La puissance imposée au mélange est avantageusement gérée de manière à favoriser les interactions physiques et empêcher les réactions chimiques qui pourraient gêner l'organisation du réseau cristallin des molécules organiques.

Avantageusement, le confinement de l'actif dans la matrice inorganique permet d'augmenter sa stabilité au feu.

Avantageusement, ledit procédé permet de fabriquer des matériaux composites recyclables en utilisant un actif biosourcé et une matrice inorganique géosourcée.

Avantageusement, le procédé permet d'obtenir un matériau composite qui ne relargue pas l'actif lors de son changement de phase.

Selon un exemple, le broyeur est un broyeur haute énergie de type planétaire, vibrationnel ou un broyeur à boulet d'agitation.

Selon une possibilité, dans le cas de broyeurs planétaires, l'étape d'assemblage est réalisée en mélangeant l'actif et la matrice inorganique dans un bol de mélange. Le bol de mélange est par exemple un bol en acier, PTFE, agate, carbure de tungstène, nitrure de silicium, oxyde de Zirconium ou oxyde d'aluminium fritté.

Selon une possibilité, l'étape d'assemblage notamment avec un broyeur planétaire utilise des billes ou cylindres de broyage. À titre d'exemple, les billes de broyage sont en acier inoxydable ou oxyde d'aluminium ou oxyde de zirconium.

À titre d'exemple, les billes de broyage présentent un diamètre compris entre 0,1cm et 10 cm, préférentiellement entre 0,1cm et 5 cm. Les billes peuvent présentées diverses formes telles que sphérique ou cylindrique. Par exemple, des billes de broyage cylindrique présentent un diamètre compris entre 0,2 à 1 cm et une hauteur comprise entre 1 et 5 cm.

Selon un mode de réalisation préféré, les billes de broyage sont ajoutées dans un rapport compris entre 1/5 et 6, voire 1/5 à 10 fois le poids total de la matrice organique et de l'actif.

Avantageusement, l'étape d'assemblage permet de réaliser des mélanges intimes sur les matériaux utilisés, par des chocs impliquant la notamment la fracturation, la déformation, pouvant être plastique, et le collage des particules afin de favoriser la dispersion et le mélange intime, tout en conservant une organisation cristalline des molécules organiques.

Le mécanisme de la mécano synthèse entraine classiquement un échauffement des composants. L'étape d'assemblage est réalisée à une température inférieure à la température de changement de phase de l'actif. Il est donc préféré, d'avoir un module de contrôle de la température au cours de l'étape d'assemblage. Avantageusement, c'est la température du mélange comprenant la matrice inorganique et l'actif qui est contrôlée.

Selon une possibilité, l'étape d'assemblage est configurée pour être réalisée sous la température de changement de phase de l'actif. Par exemple, des pauses sont réalisées au cours de l'étape d'assemblage, en arrêtant ou en ralentissant le broyage soit régulièrement soit dès que la température atteint une température plafond et tant que la température n'a pas atteint une température seuil.

Selon une autre possibilité, le module de contrôle de la température comprend un système de refroidissement configuré pour refroidir et maintenir la température au cours de l'étape d'assemblage au-dessous de la température de changement de phase de l'actif.

Le matériau composite obtenu comprend l'actif confiné dans des cavités induites par les réseaux organisationnels de la matrice inorganique.

Selon un mode de réalisation, la durée de l'étape d'assemblage est comprise entre 15 secondes et 10 heures, préférentiellement maximum 1 heure.

Les paramètres de l'étape d'assemblage tels que par exemple le design du broyeur, la masse de poudre, le ratio bille/poudre, la vitesse et le temps de broyage ainsi que la température de travail participent à obtenir un matériau composite efficace.

Selon un mode de réalisation, le procédé comprend une étape ultérieure de réagrégation du matériau composite obtenu à l'issue de l'étape d'assemblage. Une réagrégation du matériau composite obtenu à l'issue de l'étape d'assemblage est préférentiellement réalisée à une température au-dessus de la température de changement de phase et conduit à la fabrication de billes, de granules ou de pains. L'étape de réagragation est par exemple réalisé par un broyeur éventuellement haute énergie ou classique.

Selon un mode de réalisation, le procédé comprend une étape ultérieure de broyage du matériau composite obtenu à l'issue de l'étape de réagrégation. Le broyage du matériau composite obtenu à l'issue de l'étape de réagrégation conduit à l'obtention d'un matériau composite sous forme de poudre préférentiellement millimétrique. Cette étape de broyage ultérieure est réalisée par exemple avec un broyeur à haute énergie ou préférentiellement un broyeur standard. Préférentiellement, cette étape de broyage ultérieure est réalisée à une température sous la température de changement de phase de l'actif. Ce qui permet d'obtenir le composite sous forme de poudre millimétrique. Ce mode de réalisation est avantageusement utilisé lorsque la température de changement de phase de l'actif est proche de la température ambiante et que le broyeur n'est pas régulé en température.

Selon un mode de réalisation, le procédé comprend une étape ultérieure d'humidification du matériau composite obtenu à l'issue de l'étape d'assemblage ou de l'étape de réagrégation, ou de l'étape de broyage. Cette étape d'humidification comprenant l'ajout d'une quantité d'eau audit matériau composite. Le matériau composite obtenu à l'issue de l'étape d'humidification est sous forme de mélange aqueux. Préférentiellement, la quantité d'eau ajoutée est comprise entre 1/2 et 50 fois le poids du matériau composite à humidifier. Selon une possibilité, l'étape ultérieure d'humidification comprend une phase de broyage, préférentiellement à haute énergie ou de mélange par exemple manuel ou bien mécanique en fonction de la finesse de grains attendue. Le matériau composite obtenu à l'issue de la phase de broyage de l'étape d'humidification est sous forme de pâte ou de crème.

Selon un mode de réalisation, le procédé comprend une étape ultérieure de séchage du matériau composite obtenu à l'issue de l'étape d'humidification. Le séchage est effectué soit à température ambiante, soit à une température qui se situe sous la transition de phase, soit à une température qui se situe au-dessus de la transition de phase. A cette étape, le matériau composite étant déjà formé, l'actif étant déjà confiné dans la matrice inorganique, l'effet de la température de séchage ne risque pas d'endommager le matériau composite. Si l'actif change de forme en passant à l'état liquide celui-ci étant confiné dans la matrice, il n'y a pas de fuite ou de risque de perdre l'actif. Le matériau composite obtenu à l'issue de l'étape de séchage est par exemple sous forme de plaques pouvant ou non être compressées.

Selon un mode de réalisation, le procédé comprend une étape ultérieure de dispersion par agitation mécanique du matériau composite obtenu à l'issue de l'étape d'assemblage ou de l'étape de broyage. Cette étape de dispersion comprend l'ajout du matériau composite obtenu à l'issue de l'étape d'assemblage ou de l'étape de broyage dans un système aqueux avantageusement avec une agitation mécanique pouvant être concomitante à l'ajout ou bien successive. L'agitation mécanique est par exemple réalisée avec un agitateur magnétique ou un mixeur ou un appareil pour dispersion haute performance de type turrax^{®}. Le système aqueux est une suspension aqueuse par exemple de l'eau, une suspension aqueuse de fibres à base de cellulose, de suspension aqueuse de copeaux de bois ou suspension aqueuse de résines hydrophiles. Le matériau composite obtenu à l'issue de l'étape de dispersion par agitation mécanique est sous forme d'une suspension aqueuse présentant avantageusement une stabilité pendant plusieurs mois. Préférentiellement, la quantité de matériau composite ajoutée dans le système aqueux est comprise entre 5 à 20% du poids total de la suspension aqueuse obtenue. Dans ce cas-là, le matériau composite obtenu à l'issue de cette étape peut être qualifié de suspension de l'actif par exemple de paraffine, d'acide, d'ester ou d'alcool gras dans l'eau stabilisée par un support inorganique formé par la matrice inorganique.

Selon un mode de réalisation, le procédé comprend une étape ultérieure de dispersion par ultra-sonication du matériau composite obtenu à l'issue de l'étape d'assemblage ou de l'étape de broyage. Cette étape de dispersion comprend l'ajout du matériau composite obtenu à l'issue de l'étape d'assemblage ou de l'étape de broyage dans un système aqueux avantageusement avec une ultra-sonication pouvant être concomitante à l'ajout ou bien successive. L'ultra-sonication est une cavitation. Préférentiellement, la quantité de matériau composite ajoutée dans le système aqueux est comprise entre 1% à 10% préférentiellement entre 1% et 5% du poids total de la suspension aqueuse obtenue. Le système aqueux est une suspension aqueuse par exemple de l'eau, une suspension aqueuse de fibres à base de cellulose, de suspension aqueuse de copeaux de bois ou suspension aqueuse de résines hydrophiles. Le matériau composite obtenu à l'issue de l'étape de dispersion par ultra-sonication est sous forme d'une suspension aqueuse de type gels présentant avantageusement une stabilité pendant plusieurs mois. Dans ce cas-là, le matériau composite obtenu à l'issue de cette étape peut être qualifié de suspension de l'actif par exemple de paraffine, d'acide, d'ester ou d'alcool gras dans l'eau stabilisée par un support inorganique formé par la matrice inorganique.

Le procédé selon l'un quelconque des modes de réalisation ci-dessus décrits permet d'obtenir des matériaux composites également dénommés Eco-PCMs à haut potentiel énergétique par exemple sous forme de poudres, de solides, de pâtes, de crèmes ou de suspensions. Ces formes de matériau composite permettent une incorporation facile dans des matrices industrielles nombreuses et variées.

Selon une possibilité, le procédé comprend une étape d'incorporation du matériau composite obtenu à l'issue de l'étape d'assemblage ou de l'étape de réagrégation ou de l'étape de broyage ou de l'étape d'humidification ou de l'étape de dispersion dans un procédé de fabrication de plâtre, de ciment, de mortier, de béton ou encore de papier, des matières plastiques, de composés de bois.

Cette étape permet d'accroître l'inertie et la densité énergétique de matériaux par l'ajout de matériau composite.

Selon une possibilité, le matériau composite est utilisé dans des dispositifs de stockage thermique passif ou actif.

### Exemple 1

### Procédé de fabrication d'un matériau composite actif autour de 70°C

Pour l'étape d'assemblage, la matrice inorganique et l'actif sont placés sous forme de poudre dans un bol de broyage en PTFE. La matrice est constituée de 6 g de sépiolite et l'actif est constitué de14 g d'acide stéarique (SA). Des billes de broyages sous forme de petits cylindres de broyage en acier sont ajoutées dans le bol de broyage. Les cylindres de broyage ont un diamètre de 0,3 cm et une longueur de 2 cm, le rapport en masse des cylindres/poudre (matrice + actif) est de 1/1. Le temps de l'étape d'assemblage, c'est-à-dire de broyage du mélange est de 90 secondes. Le broyeur utilisé est un broyeur à haute énergie plus particulièrement un broyeur de type planétaire. La température est conservée sous la température de transition de phase en laissant reposer le mélange toutes les 30 secondes. Le matériau composite à 70% d'actif obtenu dénommé Eco-PCM-SA70 se présente sous forme de poudre.

Selon une possibilité, une étape d'humification du matériau composite obtenu est réalisée. 30 ml d'eau sont versés dans le bol contenant l'Eco-PCM-SA70 sous forme de poudre et les cylindres de broyage, l'ensemble est broyé 90 secondes sans tenir compte de la température. On obtient une pâte homogène. Une étape de mise en forme permet de réaliser une plaquette d'épaisseur de 1 cm avec cette pâte. Après une étape de séchage à température ambiante, on obtient une plaquette à l'état solide qui peut être manipulée, sciée, et qui conserve sa forme au-dessus de la transition de phase.

La réponse thermique de cette plaquette a été mesurée en fonction du temps (Figure 2). La plaquette pèse 9,762 g, sa surface est de 15,75 cm², l'épaisseur est de 1 cm.

Dans un premier temps, une surface de la plaquette est mise en contact direct avec une platine chauffante le capteur de mesure est positionné sur la surface opposée, la plaquette est chauffée à 140°C, 120°C, 100°C. L'évolution temps/température est mesurée jusqu'au palier en température, l'Eco-PCM-SA70 se charge.

Dans un second temps, la surface de la plaquette est laissée au contact de l'air ambiant, soit 20°C, et on mesure l'évolution temps température. L'Eco-PCM-SA70 se décharge. Plus la température en contact avec la surface est élevée plus la vitesse de charge est rapide.

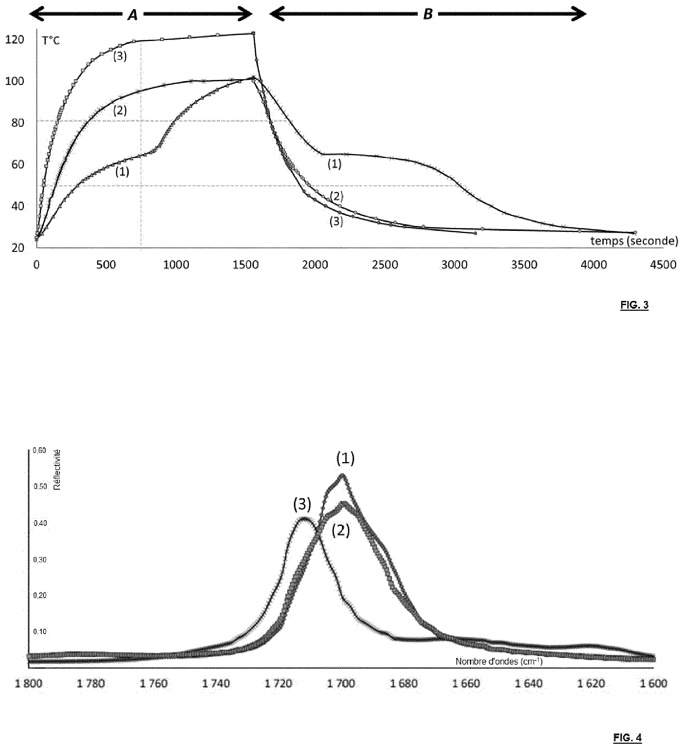

La réponse thermique de la plaquette obtenue (1) a été comparée à celle de plaquettes fabriquées à partir de la sépiolite seule (2) ou d'un mortier brut (3) (Figure 3). La température est de 140°C pour la charge, et 20°C pour la décharge.

Le temps pour atteindre 80°C est pour le mortier 149 s, pour l'argile fibreuse 362 s, pour l'Eco-PCM-SA70 981s.

Lors du refroidissement le temps pour atteindre 50°C est pour le mortier 361 s, l'argile fibreuse 399 s, l'Eco-PCM 2477s.

Sur la Figure 3 nous observons qu'après 750 s (12 min 30s) de chauffage à 140°C les températures sont pour le mortier 119°C, l'argile fibreuse 95°C, l'Eco-PCM 64°C.

La capacité des Eco-PCM à se charger et se décharger ainsi que leur pouvoir isolant a ainsi clairement été mise en évidence. La réponse thermique est proportionnelle au rapport Actif/Support.

### Exemple 2

### Procédé de fabrication d'un matériau composite actif autour de 24°C. Eco-PCM-CAMA70Usage d'un eutectique fabriqué dans la même étape de fabrication que l'Eco-PCM

Pour l'étape d'assemblage, la matrice inorganique et l'actif sont placés sous forme de poudre dans un bol de broyage en PTFE. La matrice comprend 6 g de sépiolite et l'actif comprend 10,08 g d'acide caprique (CA) et 3,92 g d'acide myristique (MA) Des billes de broyages sous forme de petits cylindres de broyage en acier sont ajoutées dans le bol de broyage. Les billes de broyage ont un diamètre de 0,3 cm et une longueur de 2 cm, le rapport en masse cylindres/poudre (matrice + actif) est de 1/1. Le temps de l'étape d'assemblage, c'est-à-dire de broyage du mélange est de huit fois 15 secondes avec des arrêts permettant au bol de revenir à température ambiante. Le matériau composite à 70% d'actif obtenu, également dénommé Eco-PCM-CAMA70 se présente sous forme de poudre.

On note que les conditions expérimentales utilisées ont permis de fabriquer un eutectique efficace confiné dans la sépiolite, et ce en présence du support lors de l'étape de fabrication de l'Eco-PCM. Effectivement, les spectres infrarouges montrent clairement l'existence d'un mélange intime entre CA et MA dans la poudre Eco-PCM-CAMA70. La figure 4 est en effet, un spectre infrarouge des groupes carbonyles (VCO) de : (1) l'acide caprique nommé CA, (2) acide myristique MA, (3) le mélange CAMA obtenu dans la poudre Eco-PCM-CAMA70. Un spectre infrarouge non représenté des groupes CH de la chaine hydrogénée (VCH) de : (1) l'acide caprique nommé CA, (2) acide myristique MA, (3) le mélange CAMA obtenu dans la poudre Eco-PCM-CAMA70 a aussi été réalisé. Les bandes infrarouges de la chaine et des groupes fonctionnels sont clairement décalées, ce qui implique la présence du mélange eutectique homogène. Le décalage de la bande VCH vers des nombres d'ondes plus importants correspond à une forme cristalline moins compactée ce qui explique la température de fusion du mélange à 24°C au lieu de 31°C pour l'acide caprique et 54,4°C pour l'acide myristique.

Les longueurs d'onde des groupes carbonyles (VCO) et des groupes CH de la chaine hydrogénée (VCH) sont données ci-dessous pour chaque courbe :

| | |
|---|---|
| (1) acide caprique - CA | : VCO à 1699 cm⁻¹ |
| (2) acide myristique - MA | : VCO à 1699 cm⁻¹ |
| (3) mélange CAMA - poudre Eco-PCM-CAMA70 | : VCO à 1711cm⁻¹ |
| (1) acide caprique - CA | : VCH à 2918 cm⁻¹ |
| (2) acide myristique - MA | : VCH à 2916 cm⁻¹ |
| (3) mélange CAMA - poudre Eco-PCM-CAMA70 | : VCH à 2928 cm⁻¹ |

Selon une possibilité, une étape d'humification du matériau composite obtenu est réalisée. 30 ml d'eau sont versés dans le bol contenant les cylindres de broyage et 20 g de poudre Eco-PCM-CAMA70, l'ensemble est broyé 90 secondes sans tenir compte de la température. On obtient une pâte homogène. Une étape de mise en forme permet de réaliser une plaquette d'épaisseur de 1 cm avec cette pâte. Après une étape de séchage à température ambiante, on obtient une plaquette à l'état solide qui peut être manipulée, sciée, et dont la composition est identique à celle de la poudre.

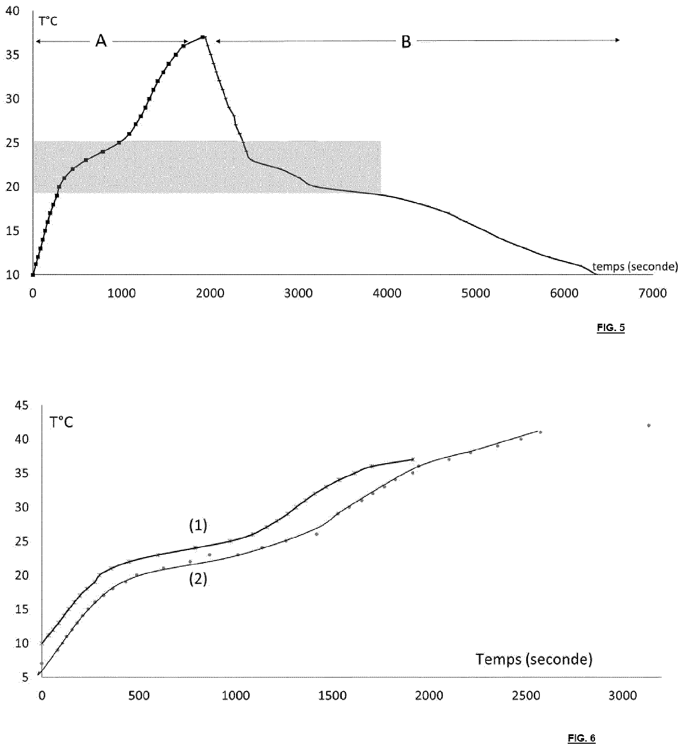

La réponse thermique de cette plaquette Eco-PCM-CAMA70 a été mesurée en fonction du temps (Figure 5). La plaquette à 4°C est chauffée à 40 °C lors de la charge et refroidie à 4°C lors de la décharge. La zone de température active de la plaquette se situe entre 19 et 24°C. Le temps mis par la plaque chauffée à 40°C pour atteindre 26°C, c'est-à-dire pour être chargée est de 1087 s et lors du refroidissement elle commence à se décharger à 24°C après 557 s. La Figure 6 démontre l'efficacité de la plaquette refroidie à 4°C lorsqu'une de ses surfaces est exposée au soleil.

### Exemple 3

### Mortier chargé en matériau composite Eco-PCM-SA70

On mélange la poudre Eco-PCM-SA70 telle que fabriquée dans l'exemple 1 avec un mortier commercial. Le pourcentage en poudre Eco-PCM-SA70 dans le mortier varie de 10% à 90% en poids. Après que le mélange à sec ait été homogénéisé, de l'eau est incorporée et le tout est malaxé (gâché) à la truelle. La pâte obtenue est moulée et séchée à température ambiante.

Des plaquettes de mortier Eco-PCM pouvant intégrer entre 7 et 63% en actif sont fabriquées, on note que les échantillons conservent leur forme à 100°C et que les molécules actives sont confinées, car aucune tâche de gras n'est constatée sur le buvard supportant les échantillons après 1h30 à 100°C.

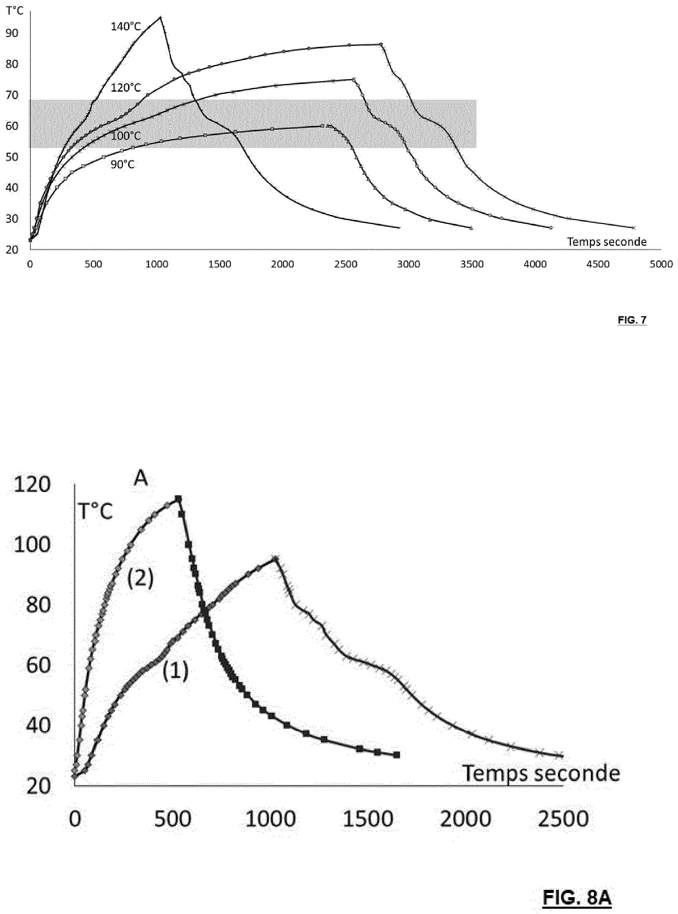

La réponse thermique (figure 7) de ce mortier chargé en Eco-PCM a été mesurée en fonction du temps en appliquant une température extérieure fixe de 90°C, 100°C, 120°C ou 140°C, le capteur de mesure est positionné sur la surface opposée. L'évolution temps/température est mesurée jusqu'au palier de température, la plaquette se charge. Dans un second temps, la surface de la plaquette est laissée au contact de l'air ambiant soit 20°C, l'évolution temps température est mesurée, on observe l'étape de décharge.

Le temps de stockage et de déstockage de chaleur est très nettement visible dans la zone 50-70°C (Figure 7). Ce temps varie très nettement avec la température extérieure appliquée à la plaquette lors de la charge, le temps mis pour atteindre 70°C est de 550 s, 930 s et 1470 s pour la plaquette chauffée respectivement à 140°C, 120°C et 100°C, le temps pour atteindre 20°C lors du refroidissement à partir de ces mêmes températures varie peu 676 s, 636 s et 500 s.

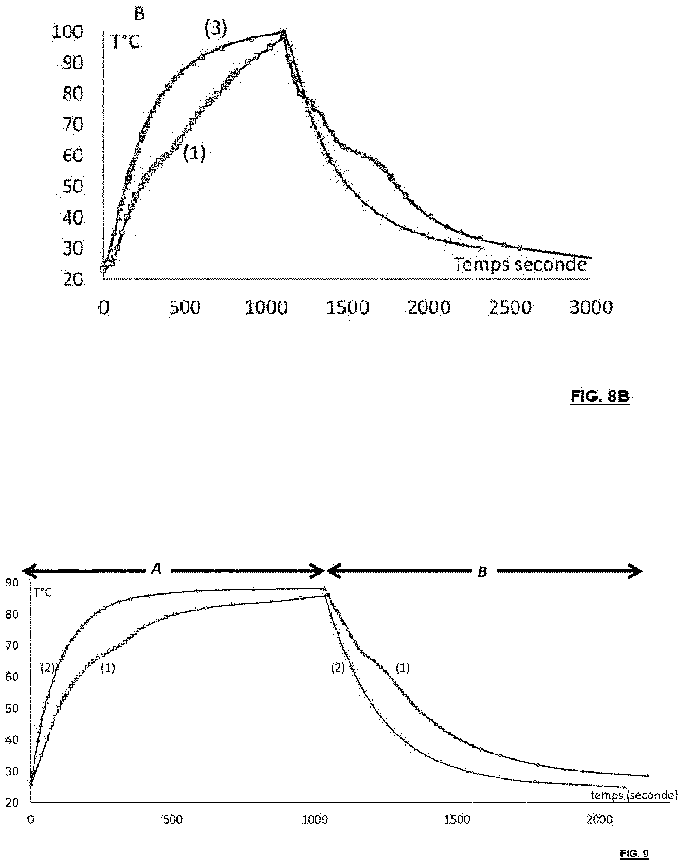

Les Figures 8A et 8B comparent respectivement les réponses thermiques de plaquettes de mortier (2) et de plaquettes de sépiolite sans additifs (3) à la réponse de la plaquette de mortier chargé en Eco-PCM (1). La forme des courbes et les temps de chauffe mettent en évidence un effet d'isolation thermique lié au temps de charge et décharge de l'Eco-PCM intégré dans le mortier.

### Exemple 4

### Carton chargé en matériau composite Eco-PCM-SA70

Du carton de boîtes de livraison est trempé dans de l'eau pendant au moins 4 heures. Après avoir été essoré et coupé en morceaux de quelques centimètres, le carton est dispersé au mixeur ou au Turrax dans de l'eau (10 g dans 2 litres d'eau 10 min Puissance 4). Le but est d'obtenir une bonne dispersion de fibres cellulosiques. Après dispersion dans l'eau au Turrax pendant 5 min à la puissance P4, on y ajoute ensuite la poudre de matériau composite Eco-PCM-SA70 tel que fabriquée dans l'exemple 1. Le pourcentage en poudre Eco-PCM-SA70 dans le carton varie de 5% à 80%, plus généralement 60%.

Le tout est mixé au Turrax (10 min Puissance 4). La suspension obtenue est déposée sur un treillis fin et pressée pour retirer l'eau et conserver la pâte (matelas). Le matelas est ensuite séché à température ambiante ou au four, le séchage peut avoir lieu au-dessous ou au-dessus de la transition de phase. Des cartons à base d'Eco-PCM pouvant intégrer jusqu'à 80% en Eco-PCM c.a.d. 56% en actif sont ainsi fabriqués.

La Figure 9 compare la réponse thermique du carton fabriqué avec la poudre Eco-PCM-SA70 (1) à la réponse thermique d'un carton moulé (2) de même épaisseur. La température extérieure imposée à la surface externe du carton est de 100°C pour la charge A, et 20°C pour la décharge B. Le stockage et le déstockage de chaleur est très nettement visible, dans la zone 50-70°. Le temps pour atteindre 80°C est pour le carton de référence 227 s et pour le carton Eco-PCM 509 s. Lors du refroidissement le temps pour atteindre 50°C est de 174 s et 308 s respectivement pour le carton de référence et pour le carton Eco-PCM ; Après 400 s de chauffage à 100°C, la température du carton Eco-PCM est de 76°C tandis qu'elle est de 86°C et pour le carton référence.

### Exemple 5

### Polyéthylène chargé en matériau composite Eco-PCM-PARA50

Un Eco-PCM sous forme de poudre est réalisé selon le procédé de l'exemple 1, dont la matrice est constituée de sépiolite et l'actif est constitué de paraffine, l'actif représentant 50% en poids du poids total matrice + actif. Un matériau composite sous forme de poudre est obtenu et nommé Eco-PCM-PARA50.

Le matériau composite obtenue Eco-PCM-PARA50 est introduit dans du polyéthylène haute densité (PE RIGIDEX) chauffé à son point de fusion qui est 160°C, l'ensemble est ensuite refroidi. Des plaques et des particules de polyéthylène chargées à 50% et 73% en Eco-PCM-PARA50 ont ainsi été fabriquées. Des analyses par calorimétrie différentielle à balayage (ou DSC de l'anglais Differential Scanning Calorimetry) de l'énergie latente emmagasinée (signe positif) puis fournie (signe négatif) ont été réalisées, sur ces PE chargés à 73% en Eco-PCM-PARA50 i.e. 36,5% en paraffine, lors de cycles de chauffage et refroidissement. Cycles de -50 à 100°C, la variation de température est de 10°C/min. Ces analyses démontrent les capacités de stockage et de déstockage énergétique de ces polymères. L'Eco-PCM a conservé des capacités de charge et décharge après son introduction dans le PE.
Température -50°C vers 100°C

**Tableau 1**

| Chauffage | TpM(°C) | HM(J/g) |
|---|---|---|
| 73% d'ECO-PCM-PARA50 | 58,37 | +48,8 |
| 50% d'ECO-PCM-PARA50 | 56,94 | +26,58 |

Température -100°C vers 50°C

**Tableau 2**

| Refroidissement | TpC(°C) | HC(J/g) |
|---|---|---|
| 73% d'ECO-PCM-PAR50 | 49,7 | -50,97 |
| 50% d'ECO-PCM-PARA50 | 50,42 | -31,79 |

### Exemple 6

### Acétate de polyvinyle chargé en matériau composite Eco-PCM-PARA50

Le même matériau composite Eco-PCM-PARA50 de l'exemple 5 est obtenu et mélangé à une émulsion aqueuse de Polyvinyl acétate (PVAc) commerciale en utilisant un Ultra Turrax. La concentration est de 12,5% d'Eco-PCM-PARA50 dans l'émulsion. Cette suspension est séchée dans un moule en téflon à température ambiante.

Les analyses sont réalisées après le démoulage. La concentration en Eco-PCM-PARA50 dans le solide est alors de 32,5%.

Des analyses par calorimétrie différentielle à balayage (ou DSC de l'anglais Differential Scanning Calorimetry) de l'énergie latente emmagasinée (signe positif) puis fournie (signe négatif) ont été réalisées, sur ces PVAc chargé avec 32,5% d'Eco-PCM-PARA50, de lors de cycles de chauffage et refroidissement. Cycles de -50 à 100°C, la variation de température est de 10°C/min. L'Eco-PCM a conservé des capacités de stockage et déstockage thermique après son introduction dans le PVAc.
Température - 50°C vers 100°C

**Tableau 3**

| Chauffage | TpM (°C) | HM (J/g) |
|---|---|---|
| 32% d'Eco-PCM-PARA50 | 57,42 | +30,6 |

Température -100°C vers 50°C

**Tableau 4**

| Refroidissement | TpC (°C) | HC (J/g) |
|---|---|---|
| 32% Eco-PCM-PARA50 | 51,58 | -28,76 |

### Exemple 7

### Augmentation de la conductivité thermique d'un Eco-PCM-SA70 par addition de 2% de nanotubes de carbone

Un Eco-PCM sous forme de poudre est réalisé selon le procédé de l'exemple 1, dont la matrice est constituée de sépiolite et l'actif est constitué d'acide stéarique et de nanotubes de carbone de sorte à obtenir un matériau composite comprenant 70% d'acide stéarique et 2% de nanotubes de carbone. Pour obtenir 50 g de matériau composite, 35 g d'acide stéarique, 1g de nanotubes de carbone et 14g de sépiolite sont mélangés.

Selon une possibilité, une étape d'humification du matériau composite obtenu est réalisée. 50 ml d'eau sont ajoutés dans le bol sur 50 g de poudre Eco-PCM-SA70 NPC2 et les cylindres de broyage, l'ensemble est broyé 90 secondes sans tenir compte de la température. On obtient une pâte homogène. Une étape de mise en forme permet de réaliser une plaquette d'épaisseur de 1 cm avec cette pâte. Après une étape de séchage à température ambiante, on obtient une plaquette Eco-PCM-SA70-NPC2 à l'état solide qui peut être manipulée, sciée, et dont la composition est identique à celle de la poudre.

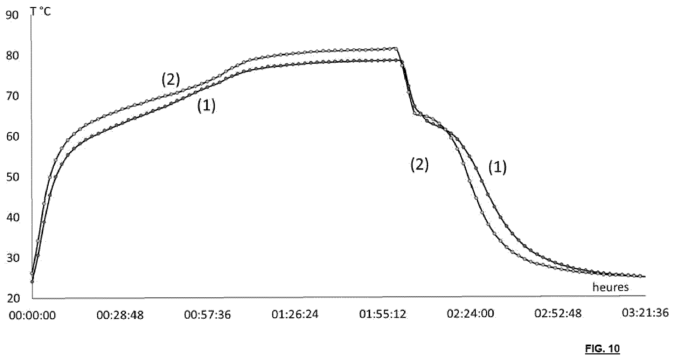

Les analyses sont réalisées après le démoulage. Les Eco-PCM-SA70-NPC2 et Eco-PCM-SA70 sont mis en contact avec un platine chauffante et isolés tandis que la température de la surface opposée à la platine est reliée par des capteurs à un enregistreur de température. L'Eco-PCM-SA70-NPC2 a une réponse thermique plus rapide que celle de L'Eco-PCM-SA70 lors des étapes de chauffage et de refroidissement (Figure 10).

L'invention n'est pas limitée aux modes de réalisations précédemment décrits et s'étend à tous les modes de réalisation couverts par l'invention.

### Liste des références :

1. Bille de broyage
2. Actif
3. Matrice inorganique
4. Bol

## Revendications

1. Procédé de synthèse d'un matériau composite comprenant une matrice inorganique et un actif, l'actif étant un matériau à changement de phase (MCP):
**caractérisé en ce que** le procédé comprend au moins une étape d'assemblage de l'actif dans la matrice par mécano synthèse réalisée sans solvant dans un broyeur à haute énergie à une température inférieure à la température de changement de phase de l'actif, l'actif étant un MCP solide - liquide.

2. Procédé selon la revendication précédente dans lequel l'étape d'assemblage par mécano synthèse est réalisée en présence de billes de broyage ayant un diamètre compris entre 1 mm et 100 mm.

3. Procédé selon la revendication précédente dans lequel les billes de broyages représentent de 1/5 à 10 fois le poids total de la matrice et de l'actif.

4. Procédé selon l'une quelconque des revendications précédentes dans lequel l'étape d'assemblage par mécano synthèse dure de 15 secondes à 10 heures.

5. Procédé selon l'une quelconque des revendications précédentes dans lequel l'actif représente de 1 à 90% en poids du poids total matrice et actif.

6. Procédé selon l'une quelconque des revendications précédentes dans lequel la matrice est choisie parmi :
- une argile de la famille des minéraux argileux de type TO, TOT ou TOT+O qui se présentent sous forme plaquettaire, tubulaire ou fibreux, par exemple les kaolinites, bentonites, perlites, vermiculites, montmorillonites, halloysites, sépiolites, palygorskites, ou
- des oxydes ou hydroxydes minéraux, par exemple des dérivés de carbonate de calcium micronisés, des poudres de marbre, des dérivés de la silice des diatomites, des microsilices, des nanosilices, ou
- du carbone sous forme de graphite, nano fibre ou fullerène, et des oxydes métalliques.

7. Procédé selon l'une quelconque des revendications précédentes dans lequel l'actif est choisi parmi les familles de paraffines, d'acides gras saturés, d'alcools gras saturés, d'esters d'acide gras, de polyéthylènes glycols, seuls ou de leur mélange.

8. Procédé selon l'une quelconque des revendications précédentes dans lequel le matériau composite obtenu à l'issue de l'étape d'assemblage est sous forme de poudre micrométrique.

9. Procédé selon l'une quelconque des revendications précédentes comprenant une étape ultérieure de réagrégation du matériau composite obtenu à l'issue de l'étape d'assemblage, le matériau composite obtenu à l'issue de l'étape de réagrégation est sous forme de billes, de granules ou de pains.

10. Procédé selon la revendication précédente comprenant une étape ultérieure de broyage du matériau composite obtenu à l'issue de l'étape de réagrégation, le matériau composite obtenu à l'issue de l'étape de broyage est sous forme de poudre micrométrique.

11. Procédé selon l'une quelconque des revendications précédentes comprenant une étape ultérieure d'humidification du matériau composite obtenu à l'issue de l'étape d'assemblage ou de l'étape de réagrégation, ou de l'étape de broyage comprenant l'ajout d'une quantité d'eau audit matériau composite, le matériau composite obtenu à l'issue de l'étape d'humidification est sous forme de mélange aqueux, l'étape d'humidification étant réalisée par l'ajout d'une quantité d'eau comprise entre 0,5 et 50 fois le poids du matériau composite à humidifier.

12. Procédé selon la revendication précédente comprenant une étape ultérieure de séchage du matériau composite obtenu à l'issue de l'étape d'humidification, le matériau composite obtenu à l'issue de l'étape de séchage est sous forme de plaques.

13. Procédé selon l'une quelconque des revendications précédentes comprenant :
- une étape ultérieure de dispersion par agitation mécanique du matériau composite obtenu à l'issue de l'étape d'assemblage ou de l'étape de broyage comprenant l'ajout d'un système aqueux audit matériau composite avec une agitation mécanique, le matériau composite obtenu à l'issue de l'étape de dispersion par agitation mécanique est sous forme d'une suspension aqueuse, ou
- une étape ultérieure de dispersion par ultra-sonication du matériau composite obtenu à l'issue de l'étape d'assemblage ou de l'étape de broyage comprenant l'ajout d'un système aqueux audit matériau composite avec une agitation par ultra-sonication, le matériau composite obtenu à l'issue de l'étape de dispersion par ultra-sonication est sous forme de gel,

14. Procédé selon la revendication précédente dans lequel une quantité de poudre de matériau composite de 1 à 10 % est ajoutée dans de l'eau ou un système aqueux.

15. Procédé selon l'une quelconque des revendications précédentes comprenant une étape d'incorporation du matériau composite obtenu à l'issue de l'étape d'assemblage ou de l'étape de réagrégation ou de l'étape de broyage ou de l'étape d'humidification ou de l'étape de dispersion dans un procédé de fabrication de plâtre, de ciment, de mortier, de béton ou encore de papier, des matières plastiques, de composés de bois .

## Patentansprüche

1. Verfahren zur Synthese eines Verbundwerkstoffs, umfassend eine anorganische Matrix und einen Wirkstoff, wobei der Wirkstoff ein Phasenwechselmaterial (PCM) ist: **dadurch gekennzeichnet, dass** das Verfahren mindestens einen Schritt zum Fügen des Wirkstoffs in die Matrix durch mechanische Synthese ohne Lösungsmittel in einer Hochenergiemühle bei einer Temperatur unter der Phasenänderungstemperatur des Wirkstoffs umfasst, wobei der Wirkstoff ein festes-flüssiges PCM ist.

2. Verfahren nach dem vorstehenden Anspruch, wobei der Fügeschritt durch mechanische Synthese bei Vorhandensein von Mahlkugeln durchgeführt wird, die einen Durchmesser aufweisen, der zwischen 1 mm und 100 mm liegt.

3. Verfahren nach dem vorstehenden Anspruch, wobei die Mahlkugeln das 1/5- bis 10-fache des Gesamtgewichts der Matrix und des Wirkstoffs darstellen.

4. Verfahren nach einem der vorstehenden Ansprüche, wobei der Schritt zum Fügen durch mechanische Synthese 15 Sekunden bis 10 Stunden dauert.

5. Verfahren nach einem der vorstehenden Ansprüche, wobei der Wirkstoff 1 bis 90 Gew.-% des Gesamtgewichts von Matrix und Wirkstoff darstellt.

6. Verfahren nach einem der vorstehenden Ansprüche, wobei die Matrix ausgewählt ist aus:
- einem Ton aus der Familie der Tonmineralien vom Typ TO, TOT oder TOT+O, die in Plättchen-, Röhren- oder Faserform vorliegen, z. B. Kaoliniten, Bentoniten, Perliten, Vermiculiten, Montmorilloniten, Halloysiten, Sepiolithen, Palygorskiten, oder
- mineralischen Oxiden oder Hydroxiden, beispielsweise mikronisierten Calciumcarbonatderivaten, Marmorpulvern, Kieselsäurederivaten von Diatomiten, Mikrosilika, Nanosilika, oder
- Kohlenstoff in Form von Graphit, Nanofaser oder Fulleren und Metalloxiden.

7. Verfahren nach einem der vorstehenden Ansprüche, wobei der Wirkstoff aus den Familien von Paraffinen, gesättigten Fettsäuren, gesättigten Fettalkoholen, Fettsäureestern, Polyethylenglykolen, allein oder in einer Mischung davon ausgewählt ist.

8. Verfahren nach einem der vorstehenden Ansprüche, wobei der nach dem Fügeschritt erhaltene Verbundwerkstoff in Form eines mikrometrischen Pulvers vorliegt.

9. Verfahren nach einem der vorstehenden Ansprüche, das einen nachfolgenden Schritt zur Reaggregation des nach dem Fügeschritt erhaltenen Verbundwerkstoffs umfasst, wobei der nach dem Reaggregationsschritt erhaltene Verbundwerkstoff in Form von Kugeln, Granulaten oder Laiben vorliegt.

10. Verfahren nach dem vorstehenden Anspruch, das einen nachfolgenden Schritt zum Mahlen des nach dem Reaggregationsschritt erhaltenen Verbundwerkstoffs umfasst, wobei der nach dem Mahlschritt erhaltene Verbundwerkstoff in Form von mikrometrischem Pulver vorliegt.

11. Verfahren nach einem der vorstehenden Ansprüche, das einen nachfolgenden Schritt zum Befeuchten des nach dem Fügeschritt oder dem Reaggregationsschritt erhaltenen Verbundwerkstoffs oder den Mahlschritt umfasst, der das Zugeben einer Wassermenge zu dem Verbundwerkstoff umfasst, wobei der Verbundwerkstoff, der nach dem Befeuchtungsschritt erhalten wurde, in Form eines wässrigen Gemisches vorliegt, wobei der Befeuchtungsschritt durch Zugeben einer Wassermenge zwischen dem 0,5- und 50-Fachen des Gewichts des zu befeuchtenden Verbundwerkstoffs durchgeführt wird.

12. Verfahren nach dem vorstehenden Anspruch, das einen nachfolgenden Schritt zum Trocknen des nach dem Befeuchtungsschritt erhaltenen Verbundwerkstoffs umfasst, wobei der nach dem Trocknungsschritt erhaltene Verbundwerkstoff in Form von Plättchen vorliegt.

13. Verfahren nach einem der vorstehenden Ansprüche, umfassend:
- einen nachfolgenden Schritt zum Dispergieren durch mechanisches Rühren des nach dem Fügeschritt oder dem Mahlschritt erhaltenen Verbundwerkstoffs, der das Zugeben eines wässrigen Systems zum Verbundwerkstoff mit mechanischem Rühren umfasst, wobei der Verbundwerkstoff, der nach dem Dispergierschritt durch mechanisches Rühren erhalten wurde, in Form einer wässrigen Suspension vorliegt, oder
- einen nachfolgenden Schritt zum Ultraschallbehandeln des nach dem Fügeschritt oder dem Mahlschritt erhaltenen Verbundwerkstoffs, der das Zugeben eines wässrigen Systems zu dem Verbundwerkstoff mit Ultraschallrühren umfasst, wobei der nach dem Ultraschalldispergierungsschritt erhaltene Verbundwerkstoff in Form von Gel vorliegt,

14. Verfahren nach dem vorstehenden Anspruch, wobei eine Menge von 1 bis 10 % an Verbundwerkstoffpulver in Wasser oder ein wässriges System zugegeben wird.

15. Verfahren nach einem der vorstehenden Ansprüche, das einen Schritt des Einarbeitens des nach dem Fügeschritt oder dem Reaggregationsschritt oder dem Mahlschritt oder dem Befeuchtungsschritt oder dem Dispergierschritt erhaltenen Verbundwerkstoffs in ein Verfahren zur Herstellung von Gips, Zement, Mörtel, Beton oder auch Papier, Kunststoffen, Holzverbindungen umfasst.

## Claims

1. Method for synthesising a composite material comprising an inorganic matrix and an active ingredient, the active ingredient being a phase-change material (PCM):
**characterised in that** the method comprises at least one step of assembling the active ingredient into the matrix by mechanosynthesis carried out without a solvent in a high-energy mill at a temperature lower than the phase change temperature of the active ingredient, the active ingredient being a solid-liquid PCM.

2. Method according to the preceding claim, wherein the assembly step by mechanosynthesis is carried out in the presence of grinding beads having a diameter of between 1 mm and 100 mm.

3. Method according to the preceding claim, wherein the grinding beads represent from 1/5 to 10 times the total weight of the matrix and the active ingredient.

4. Method according to any one of the preceding claims, wherein the assembly step by mechanosynthesis lasts from 15 seconds to 10 hours.

5. Method according to any one of the preceding claims, wherein the active ingredient represents from 1 to 90% by weight of the total weight of the matrix and active ingredient.

6. Method according to any one of the preceding claims, wherein the matrix is selected from:
- a clay of the family of clay minerals of the TO, TOT or TOT+O type which are in platelet, tubular or fibrous form, for example kaolinites, bentonites, perlites, vermiculites, montmorillonites, halloysites, sepiolites, palygorskites, or
- mineral oxides or hydroxides, for example micronised calcium carbonate derivatives, marble powders, silica derivatives of diatomites, microsilica, nanosilica, or
- carbon in the form of graphite, nanofibre or fullerene, and metal oxides.

7. Method according to any one of the preceding claims, wherein the active ingredient is selected from the families of paraffins, saturated fatty acids, saturated fatty alcohols, fatty acid esters, polyethylene glycols, alone or in a mixture thereof.

8. Method according to any one of the preceding claims, wherein the composite material obtained at the end of the assembly step is in the form of micrometric powder.

9. Method according to any one of the preceding claims comprising a subsequent step of reaggregating the composite material obtained at the end of the assembly step, the composite material obtained at the end of the reaggregating step being in the form of pellets, granules or cakes.

10. Method according to the preceding claim, comprising a subsequent step of grinding the composite material obtained at the end of the reaggregation step, the composite material obtained at the end of the grinding step being in the form of micrometric powder.

11. Method according to any one of the preceding claims comprising a subsequent step of humidifying the composite material obtained at the end of the assembly step or the reaggregating step or the grinding step, comprising adding an amount of water to said composite material, the composite material obtained at the end of the humidifying step being in the form of an aqueous mixture, the humidifying step being performed by adding an amount of water between 0.5 and 50 times the weight of the composite material to be humidified.

12. Method according to the preceding claim comprising a subsequent step of drying the composite material obtained at the end of the humidifying step, the composite material obtained at the end of the drying step being in the form of plates.

13. Method according to any one of the preceding claims comprising:
- a subsequent step of dispersing by mechanical stirring the composite material obtained at the end of the assembly step or the grinding step, comprising adding an aqueous system to said composite material with mechanical stirring, the composite material obtained at the end of the step of dispersing by mechanical stirring being in the form of an aqueous suspension, or
- a subsequent step of dispersing by ultrasonication the composite material obtained at the end of the assembly step or the grinding step, comprising the addition of an aqueous system to said composite material with stirring by ultrasonication, the composite material obtained at the end of the step of dispersing by ultrasonication being in the form of a gel.

14. Method according to the preceding claim, wherein an amount from 1 to 10% of composite material powder is added to water or an aqueous system.

15. Method according to any one of the preceding claims comprising a step of incorporating the composite material obtained at the end of the assembly step or the reaggregation step or the grinding step or the humidifying step or the dispersion step into a method for manufacturing plaster, cement, mortar, concrete or even paper, plastics, or wood composites.
